# EUROPEAN PATENT APPLICATION

(11) **EP 3 556 566 A1**
(43) Date of publication of application: **23.10.2019**
(21) Application number: 19160995.7
(22) Date of filing: 06.03.2019
(51) Int. Cl.: B41M 5/24, B41M 7/00, B41M 3/00, B44C 1/26, B44C 3/10

(54) **METHOD FOR IMPROVING VISUAL CONTRASTS OF LASER ETCH MARKING ON PAINTED SURFACES**

(30) Priority: 06.03.2018 US 201815912823
(71) Applicant: Goodrich Corporation, Charlotte, NC 28217-4578 (US)
(72) Inventor: WILLIAMSON, J. Keith, Fairview Park, OH Ohio 44126 (US)
(74) Representative: Dehns

(57) **Abstract**

A method for improving visual contrast of laser etch markings on painted substrates may comprise applying a laser light to a surface of a painted layer (102) to ablate an ablated portion (200) of the painted layer, applying a contrast layer (206) over the surface of the painted layer to fill the ablated portion with the contrast layer, and removing the contrast layer to leave a contrasting portion within the ablated portion. The method may further comprise forming a floor (208) beneath a surface line of the ablated portion, the floor defining an underlying portion comprised of the painted layer. The method may further comprise applying a protective layer (302) over the contrasting portion.

## Description

### FIELD

The present disclosure relates to part markings and, more specifically, to improving visual contrast of laser etch markings.

### BACKGROUND

Lasers may be used to mark substrates by ablating (i.e., etching) a portion of a surface layer of substrate tending thereby to alter the visual contrast of the ablated portion with respect to the surface layer of substrate. Where the surface layer comprises a paint, the laser tends to leave the visual contrast unaltered between the ablated portion and the surface layer. In this regard, laser etch markings tend to have poor visual contrast on painted substrates.

### SUMMARY

In various embodiments, a method for improving visual contrast of laser etch markings on painted substrates comprises applying a laser light to a surface of a painted layer on a substrate to form an ablated portion of the painted layer, applying a contrast layer over the surface of the painted layer to fill the ablated portion with the contrast layer, and removing the contrast layer to leave a contrasting portion within the ablated portion.

In various embodiments, the ablated portion includes a floor located beneath a surface line of the ablated portion, wherein the floor defines an underlying portion comprised of the painted layer. In various embodiments, the method may also comprise applying a protective layer over the contrasting portion. In various embodiments, the method may also comprise altering a surface of the substrate to improve adhesion of the painted layer. In various embodiments, applying the laser light further comprises configuring a laser marking apparatus to produce the laser light. In various embodiments, configuring the laser marking apparatus further comprises selecting at least one of a beam dwell time, a laser power output, a resolution, a wavelength of laser light, or an ablation depth. In various embodiments, the laser power output is between 10 watts and 30 watts and the wavelength of the laser light is between 1 µm and 5 µm. In various embodiments, the painted layer is between 0.001 in and 0.1 in (0.0254 mm and 2.54 mm) thick. In various embodiments, the protective layer is between 0.0005 in and 0.002 in (0.0127 mm and 0.0508 mm) thick. In various embodiments, the contrast layer comprises an alcohol soluble resin.

In various embodiments an article of manufacture is provided. The article of manufacture may include a painted substrate having a marking thereon, the marking comprising an ablated portion of a painted layer, a contrasting portion within the ablated portion, and a protective layer over the contrasting portion.

In various embodiments, the ablated portion is ablated in response to applying a laser light to a surface of the painted layer. In various embodiments, the contrasting portion is formed in response to applying and then partially removing a contrast layer over the painted layer. In various embodiments, the painted layer is at least 0.001 in (0.0254 mm) thick. In various embodiments, the wavelength of the laser light is between 1 µm and 5 µm. In various embodiments, the ablated portion comprises a floor located beneath a surface line of the painted layer, wherein a depth of the floor beneath the surface line of the painted layer is between 0.0001 in and 0.0003 in (0.00254 mm and 0.00762 mm). In various embodiments, the contrasting portion comprises an alcohol soluble resin. In various embodiments, the ablated portion further comprises a machine readable code on the painted layer. In various embodiments, the ablated portion further comprises a marking calibration array on the painted layer.

In various embodiments an aerospace part is provided. The aerospace part comprises a painted layer, an ablated portion of the painted layer, the ablated portion ablated by a laser light and having an underlying portion located beneath a surface line of the painted layer, wherein the underlying portion comprises the painted layer, a contrasting portion located within the ablated portion and comprising an alcohol soluble resin, and a clear coat substantially transmissive to visible light located over the contrasting portion.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1A illustrates a substrate, in accordance with various embodiments;
FIG. 1B illustrates a painted substrate, in accordance with various embodiments;
FIG. 2A illustrates an ablated portion of a painted substrate, in accordance with various embodiments;
FIG. 2B illustrates an ablated portion of a painted substrate, in accordance with various embodiments;
FIG. 3A illustrates a contrast enhanced painted substrate, in accordance with various embodiments;
FIG. 3B illustrates a contrast enhanced painted substrate, in accordance with various embodiments;
FIG. 4 illustrates an article of manufacture, in accordance with various embodiments;
FIG. 5 illustrates a method for improving visual contrast of laser etch markings on painted substrates, in accordance with various embodiments; and
FIG. 6 illustrates a method for improving visual contrast of laser etch markings on painted substrates, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

Manufacturing complex goods such as, for example, aircraft, tends to entail the integration of numerous parts. In various embodiments, part markings may be applied to parts for assembly and logistical purposes and may convey information such as part numbers, Commercial And Government Entity (CAGE) Code codes, and/or serial numbers and the like, or may store information in the form of bar codes or QR codes and the like. In various embodiments, part markings may be applied by laser light such as, for example, by laser ablation. In various embodiments, laser light may ablate a portion of a surface layer of a substrate (i.e., a base material) leaving a floor of the ablated portion relatively beneath the surface layer. In various embodiments, the floor may comprise a disrupted surface. In this regard, the visual contrast of the ablated portion is altered with respect to the surface layer of substrate. In metallic structures, the visual contrast may be altered as a function of surface reflectivity between a relatively polished surface layer (specular reflection) and the roughened or disrupted ablated floor of the ablated portion (diffuse reflection). In various embodiments, when the surface layer comprises a paint, the laser tends to ablate a portion of paint while leaving an underlying layer of paint (the surface layer of paint and the underlying layer of paint tending to have uniform surface reflectivity) tending thereby to leave the visual contrast unaltered between the ablated portion and the surface layer. Stated another way, laser etch markings tend to have poor visual contrast on painted substrates unless the painted layer is fully ablated through to the underlying substrate.

Laser marking processes tend to affect the base material of parts by ablating a portion of the base material. In this regard, laser part marking tends to be limited to non-fatigue parts or parts which have features tending to mitigate the impact of direct laser marking. In various embodiments, a substrate may be sensitive to laser marking processes, may be unsuited to laser marking, or may have otherwise undesirable surface performance characteristics. In various embodiments, a paint or other surface treatments may be applied over a substrate to alter the surface performance characteristics of the substrate (e.g., as a surface protectant), therefore, fully ablating a portion of the surface treatment may tend to degrade the performance of the substrate. In various embodiments, a laser part marking apparatus may supply laser light and provide a configurable laser light output which may affect part marking performance. In various embodiments, the power output of the laser part marking apparatus may be between 10 watts and 30 watts. In various embodiments, the resolution of the laser part marking apparatus may be between 1 µm and 5 µm. In various embodiments, the wavelength of the laser light may be between 9.1 µm and 10.9 µm. In various embodiments, the ablation depth may be configured between 0.00001 in. (0.254 µm) to 0.001 in. (25.4 µm), or may be configured between 0.00005 in. (1.27 µm) to 0.0005 in. (12.7 µm), or may be configured between 0.0001 in. (2.54 µm) and 0.0003 in. (7.62 µm). In various embodiments, the beam dwell time of the laser light may be configurable. In various embodiments, the laser light output may be configured to ablate a painted layer. In various embodiments and when configured to ablate a painted layer, the laser part marking apparatus may be unable to ablate a metallic substrate.

In various embodiments, a laser marking apparatus may be configured to ablate a portion of a painted layer and, in response to ablating the portion of the painted layer, a contrast layer may be applied over the painted layer. In various embodiments, the configuring may comprise selecting at least one of a wavelength of laser light, a power output, or an ablation depth. In various embodiments a contrasting portion fills the ablated portion of the painted layer in response to applying the contrast layer. In various embodiments, the contrast layer may be removed or wiped away in response to the contrasting portion filling the ablated portion and, in response, the contrasting portion may remain within the ablated portion. In various embodiments, a contrast layer may comprise a resin, such as a plant based alcohol soluble resin, and a pigment or other colorant. In various embodiments, the contrast layer may further comprise an alcohol such as one of isopropanol or ethanol. In various embodiments and in response to the contrasting portion remaining within the ablated portion, a protective layer may be applied over the contrasting portion. In various embodiments, the protective layer may comprise one of an enamel, an epoxy, or a resin.

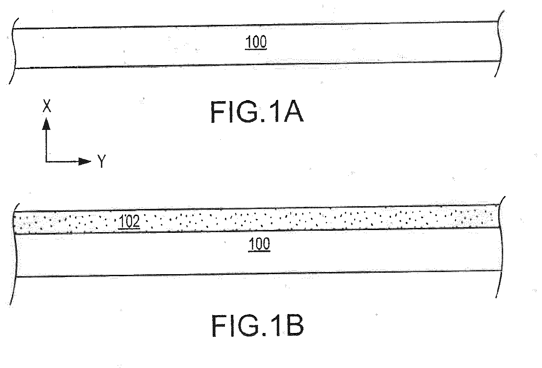

With reference to FIGs. 1A and 1B, a substrate 100 is provided according to various embodiments. Substrate 100 may comprise the surface of a part such as, for example, an aerospace part. Substrate 100 may comprise one of a metal, an alloy, a steel, a stainless steel, aluminum, an aluminum alloy, titanium, a titanium alloy, a wood, a plastic, a composite, a ceramic, any other suitable substrate or combinations thereof. Painted layer 102 is applied over substrate 100 and may comprise at least one of an enamel, an epoxy, an acrylic, a thermoplastic polymer, a thermoset polymer, a polyester, a polyurethane, a polyester-epoxy, or combinations thereof. In various embodiments, substrate 100 may be cleaned or otherwise prepared prior to application of painted layer 102 in such a manner as to enhance the adhesion of painted layer 102 to substrate 100. In various embodiments, substrate 100 may comprise a disrupted surface, such as, for example, a surface which is roughened or abraded. In various embodiments, a painted layer may be at least 0.001 in (0.0254 mm) thick (in the x-direction), i.e. a thickness from a surface of the substrate 100 to a surface line 204 of the painted layer 102.

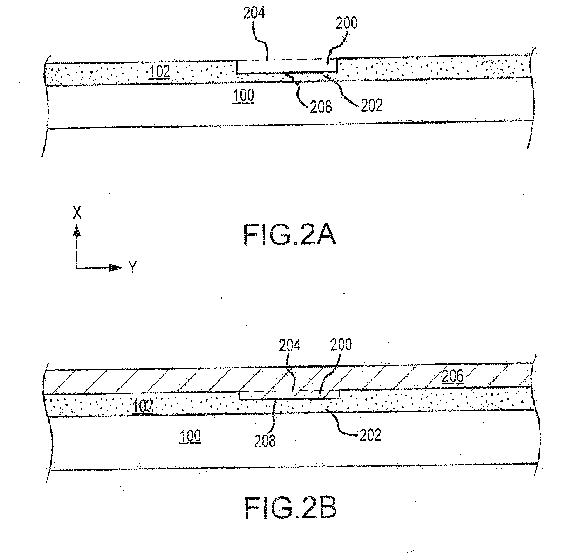

With reference to FIGs. 2A and 2B, an ablated portion 200 of painted layer 102 has been ablated by a laser marking apparatus according to various embodiments. Ablated portion 200 has a depth defined between surface line 204 of painted layer 102 and floor 208. Floor 208 defines an underlying portion 202 of paint comprised of the painted layer 102. In response to the ablating the ablated portion 200, contrast layer 206 is applied over painted layer 102, filling the ablated portion 200 above (relative to the x-axis) the floor 208 and underlying portion 202.

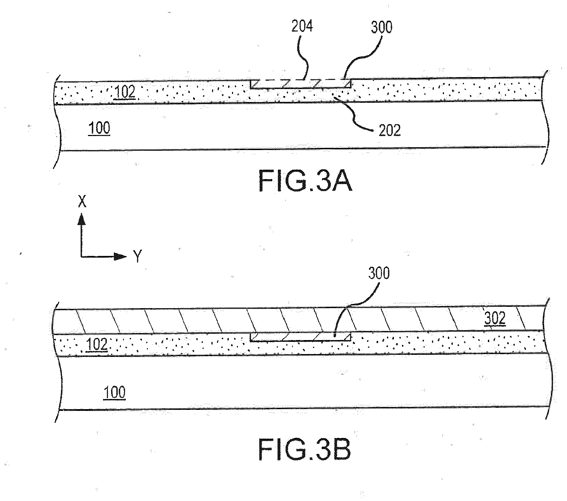

With reference to FIGs. 3A and 3B, in various embodiments contrast layer 206 is removed leaving a contrasting portion 300 within ablated portion 200 over underlying portion 202 and beneath surface line 204. A protective layer 302 such as, for example, a clear coat substantially transmissive to visible light, is applied over the contrasting portion 300 and the painted layer 102. In various embodiment, a clear coat may comprise one of an enamel, an epoxy, or a resin, such as, for example Testers® spray enamel high gloss, clear, a clear nail polish, AzkoNobel Aerospace Coatings Aerodur® clear overcoat, or WLS Coatings 100-142/CA-1 13 polyurethane coating. In various embodiments, a protective layer may be between 0.0005 in (0.0127 mm) and 0.002 in (0.0508 mm) thick.

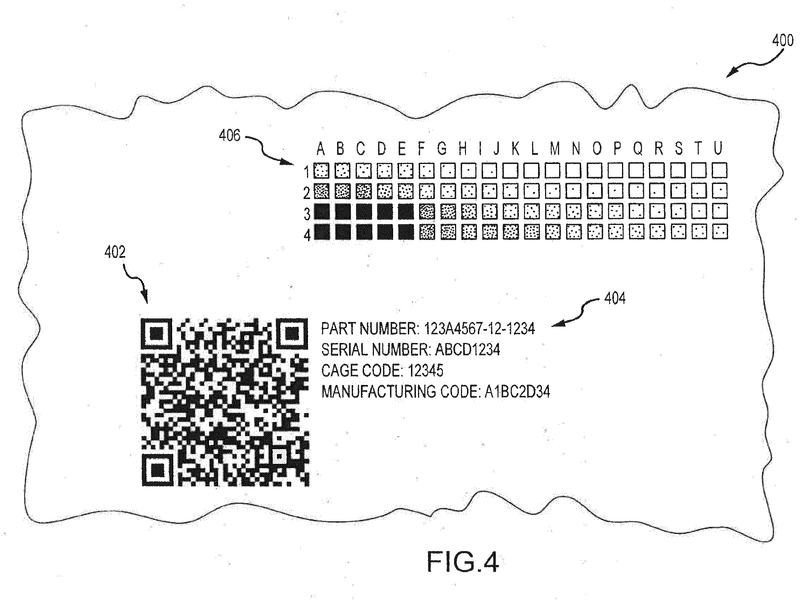

In various embodiments and with reference to FIG. 4, an article of manufacture 400 having improved visual contrast markings may comprise machine readable information such as a matrix bar code conforming to the ISO/IEC 18004 standard, such as Quick Response (QR) code 402 or printing 404. In various embodiments, article 400 may further comprise a marking calibration array 406. In various embodiments, marking calibration array 406 may comprise an array of ablated portions corresponding to a set of configuration settings of a laser part marking apparatus. In various embodiments, the marking calibration array 406 may correspond to a power output setting of a laser part marking apparatus (e.g., rows 1-4) and a beam dwell time of the laser light (e.g., columns A-U). In this regard, the visual contrast of markings on the painted substrate may tend to be optimized by selecting a particular configuration from the set of configuration settings and thereby configuring the laser part marking apparatus to emit a configured laser light tending to produce markings having optimized visual contrast.

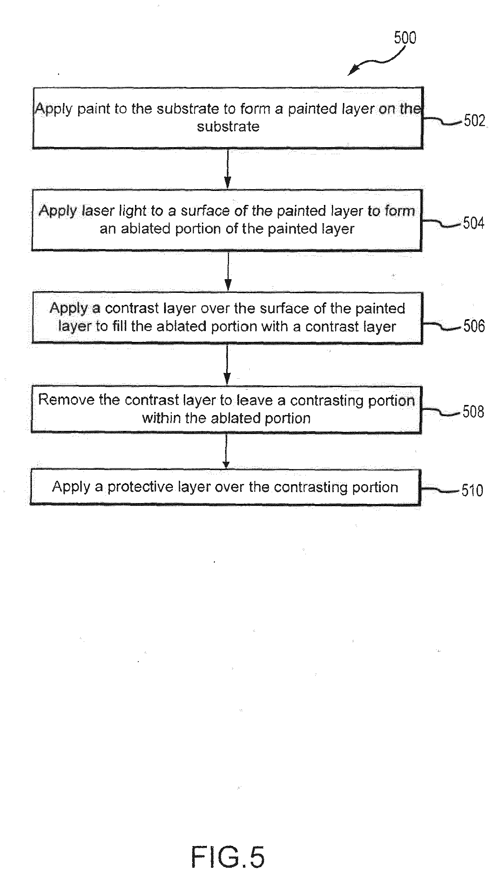

With reference to FIG. 5, a method 500 for improving visual contrast of laser etch markings on painted substrates is illustrated in accordance with various embodiments. Method 500 includes applying paint to a substrate to form a painted layer on the substrate (step 502). Method 500 includes applying a laser light to a surface of the painted layer to form an ablated portion of the painted layer (step 505), applying a contrast layer over the surface of the painted layer to fill the ablated portion with the contrast layer (step 506), and removing the contrast layer to leave a contrasting portion within the ablated portion (step 508). Method 500 may include applying a protective layer over the contrasting portion (step 510).

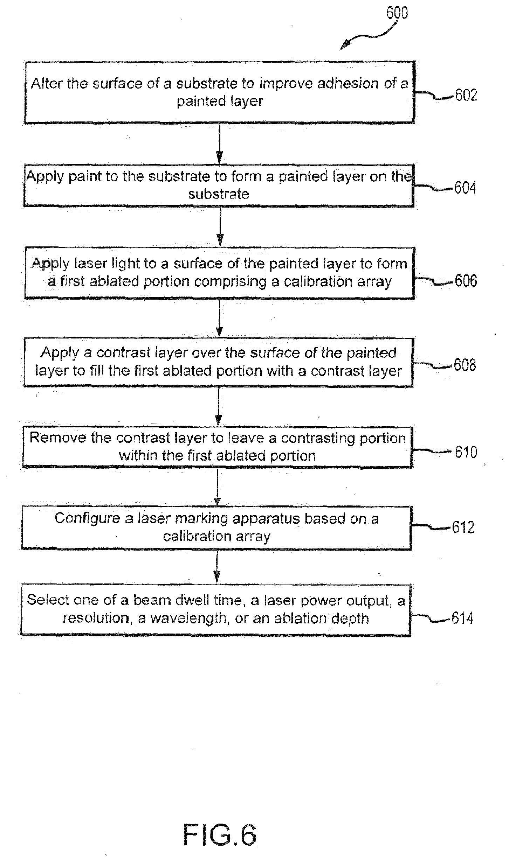

With reference to FIG. 6, a method 600 for improving visual contrast of laser etch markings on painted substrates is illustrated in accordance with various embodiments. Method 600 may include altering the surface of the substrate to improve adhesion of the painted layer (step 602). Method 600 may include applying paint to the substrate to form a painted layer over the substrate (step 604). Method 600 includes applying a laser light to a surface of the painted layer to form an ablated portion of the painted layer comprising a calibration array (step 606), applying a contrast layer over the surface of the painted layer to fill the ablated portion with the contrast layer (step 608), and removing the contrast layer to leave a contrasting portion within the ablated portion (step 610). Method 600 includes configuring a laser marking apparatus based on the calibration array (step 612). In various embodiments step 612 further comprises selecting at least one of a beam dwell time, a laser power output, a resolution, a wavelength of laser light, or an ablation depth (step 614).

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

## Claims

1. A method for improving visual contrast of a marking on a painted substrate, comprising:
applying a laser light to a surface of a painted layer on a substrate to form an ablated portion of the painted layer;
applying a contrast layer over the surface of the painted layer to fill the ablated portion with the contrast layer; and
removing the contrast layer to leave a contrasting portion within the ablated portion.

2. The method of claim 1, wherein the ablated portion includes a floor located beneath a surface line of the ablated portion, wherein the floor defines an underlying portion comprised of the painted layer.

3. The method of claim 1 or 2, further comprising applying a protective layer over the contrasting portion.

4. The method of claim 1, 2 or 3, further comprising altering a surface of the substrate to improve adhesion of the painted layer.

5. The method of any preceding claim, wherein applying the laser light further comprising configuring a laser marking apparatus to produce the laser light, and preferably wherein configuring the laser marking apparatus further comprises selecting at least one of a beam dwell time, a laser power output, a resolution, a wavelength of the laser light, or an ablation depth; and preferably wherein the laser power output is between 10 watts and 30 watts and wherein the wavelength of the laser light is between 1 µm and 5 µm.

6. The method of any preceding claim, wherein the painted layer is between 0.001 in and 0.1 in (0.0254 mm and 2.54 mm) thick.

7. The method of claim 3 or any claim dependent thereon, wherein the protective layer is between 0.0005 in and 0.002 in (0.0127 mm and 0.0506 mm) thick.

8. The method of any preceding claim, wherein the contrast layer comprises an alcohol soluble resin.

9. An article of manufacture including a painted substrate having a marking thereon, the marking comprising:
an ablated portion (200) of a painted layer (102);
a contrasting portion (206) within the ablated portion; and
a protective layer (302) over the contrasting portion.

10. The article of manufacture of claim 9, wherein the ablated portion is ablated in response to applying a laser light to a surface of the painted layer.

11. The article of manufacture of claim 9 or 10, wherein the contrasting portion is formed in response to applying and then partially removing a contrast layer over the painted layer.

12. The article of manufacture of claim 9, 10 or 11, wherein the painted layer is at least 0.001 in (0.0254 mm) thick.

13. The article of manufacture of claim 10 or any claim dependent thereon, wherein a wavelength of the laser light is between 1 µm and 5 µm.

14. The article of manufacture of any of claims 9 to 13, wherein the ablated portion comprises a floor (208) located beneath a surface line (204) of the painted layer, wherein a depth of the floor beneath the surface line of the painted layer is between 0.0001 in and 0.0003 in (0.00254 and 0.00762 mm); and/or wherein the contrasting portion comprises an alcohol soluble resin; and/or wherein the ablated portion further comprises a machine readable code on the painted layer; and/or wherein the ablated portion further comprises a marking calibration array on the painted layer.

15. An aerospace part comprising:
a painted layer (102);
an ablated portion (200) of the painted layer, the ablated portion ablated by a laser light and having an underlying portion located beneath a surface line (204) of the painted layer, wherein the underlying portion comprises the painted layer;
a contrasting portion (206) located within the ablated portion and comprising an alcohol soluble resin; and
a clear coat substantially transmissive to visible light located over the contrasting portion.
